# EUROPÄISCHE PATENTSCHRIFT

(11) **EP 4 033 256 B1**
(45) Veröffentlichungstag und Bekanntmachung des Hinweises auf die Patenterteilung: **09.04.2025**
(21) Anmeldenummer: 22152896.1
(22) Anmeldetag: 24.01.2022
(51) Int. Cl.: G01P 21/02, G01P 3/487, B62J 45/412

(54) **VERFAHREN ZUM BEEINFLUSSEN EINES ERMITTELNS EINER GESCHWINDIGKEIT EINES FAHRRADS**
METHOD FOR CONTROLLING THE DETERMINATION OF A SPEED OF A BICYCLE
PROCÉDÉ D'INFLUENCE D'UNE DÉTERMINATION D'UNE VITESSE D'UNE BICYCLETTE

(30) Priorität: 25.01.2021 DE 102021200625
(43) Veröffentlichungstag der Anmeldung: 27.07.2022
(73) Patentinhaber: Robert Bosch GmbH, 70442 Stuttgart (DE)
(72) Erfinder: Stegmaier, Juergen, 72827 Wannweil (DE); Dackermann, Tim, 72074 Tuebingen (DE)

(56) Entgegenhaltungen:
- DE-A1- 102013 225 312
- DE-A1- 102017 212 903
- US-A1- 2010 060 264
- US-A1- 2013 249 535

## Beschreibung

### Technisches Gebiet

Die Erfindung betrifft ein Verfahren zum Beeinflussen eines Ermittelns einer Geschwindigkeit eines Fahrrads mit zumindest zwei Rädern, insbesondere eines Pedelecs.

Die Erfindung betrifft weiter ein System zum Beeinflussen eines Ermittelns einer Geschwindigkeit eines Fahrrads mit zumindest zwei Rädern, insbesondere eines Pedelecs.

Die Erfindung betrifft darüber hinaus ein Fahrrad mit einer Beeinflussungsvorrichtung.

### Stand der Technik

Obwohl allgemein auf beliebige Fahrräder anwendbar, wird die vorliegende Erfindung in Bezug auf Fahrräder in Form von Pedelecs beschrieben.

Es ist bei Pedelecs bekannt geworden, zur Geschwindigkeitsmessung einen pulsbasierten Sensor, kurz Pulssensor, am Hinterrad einzusetzen. Dieser liefert einen Puls pro Radumdrehung auf dessen Basis und mittels des Radumfangs eine Geschwindigkeit berechnet werden kann. Die Geschwindigkeit kann dann aus dem mathematischen Zusammenhang zwischen dem Zeitabstand zweier aufeinanderfolgender Pulse sowie dem Reifenumfang berechnet werden. Dieses Signal wird in bisher bekannter Weise unter anderem dazu eingesetzt, die Fahrer-Unterstützung ab einer gewissen Geschwindigkeit, beispielsweise 25 km/h, abzuregeln, um so gesetzliche Vorgaben zu erfüllen. Zur Überprüfung der Pedelec-Funktionen, beispielsweise nach einer Reparatur oder dergleichen, kann es erforderlich sein, dass die Geschwindigkeit des Pedelecs - abhängig oder unabhängig von der tatsächlichen Fahrgeschwindigkeit - temporär angepasst werden muss. Hierzu ist es bekannt geworden, in aufwendiger Weise entweder die Software zur Geschwindigkeitsermittlung temporär anzupassen oder auch die vom Pedelec unabhängige Einheit zur Anpassung der Eingangssignale des Pulssensors. Hierzu ist es weiterhin bekannt geworden, eine elektronische Schaltung zwischen Ausgang des Pulssensors und der Pedelec-Antriebseinheit oder auch auf den Pulssensor direkt aufgesetzt, einzusetzen.

DE 10 2017 212903 A1 offenbart einen Fahrradgeschwindigkeitssensor mit an dem Rad fixierten Magneten und einer an dem Fahrrad angeordneten Magnetfeldsensor. Die erfassten Magnetfeldsensorsignale werden mit abgespeicherten Vergleichswerten verglichen und aus Abweichungen kann ein Fehler in der Drehbewegung des Rades erkannt werden.

US 2013/249535 A1 offenbart einen induktiven Drehsensor für den Motor eines Aufzugs oder eines Förderbandes. Eine Prüfungsvorrichtung ist vorhanden, aufweisend eine Spule zur Schaffung eines Prüffeldes, das durch den Drehsensor erfasst wird.

US 2010/060264 A1 offenbart eine Prüfungsvorrichtung für einen induktiven Drehgeber mit einer zusätzlichen Spule zur Schaffung eines Prüffeldes.

DE 2013 225312 A1 offenbart einen Drehsensor für einen Kraftfahrzeug. Ein Testfeld wird basierend auf einem Teststrom erregt, der eine Encoderscheibe simulieren kann, zur Prüfung des Drehsensors.

### Offenbarung der Erfindung

In einer Ausführungsform stellt die vorliegende Erfindung ein Verfahren gemäß Anspruch 1 zum Beeinflussen eines Ermittelns einer Geschwindigkeit eines Fahrrads mit zumindest zwei Rädern, insbesondere eines Pedelecs, bereit.

In einer weiteren Ausführungsform stellt die vorliegende Erfindung ein System gemäß Anspruch 5 zum Beeinflussen eines Ermittelns einer Geschwindigkeit eines Fahrrads mit zumindest zwei Rädern, insbesondere eines Pedelecs bereit.

In einer weiteren Ausführungsform stellt die vorliegende Erfindung ein Fahrrad gemäß Anspruch 7 bereit.

Mit anderen Worten ermöglichen Ausführungsformen der Erfindung eine Anpassung eines gemessenen Signals auf dem physikalischen Wirkpfad hinsichtlich der Geschwindigkeitsvorgabe unabhängig von der tatsächlichen Fahrgeschwindigkeit des Fahrrads, insbesondere des Pedelecs.

Einer der damit erzielten Vorteile ist, dass auch bei Messung von kontinuierlichen Werten von einem Sensor - im Gegensatz zu dem bisher bekannten Reed-Sensor mit Reed-Signal, welches nur die Werte 0 und 1 aufweist - ein entsprechend gemessenes Signal zur Ermittlung der Geschwindigkeit beeinflusst werden kann. Weitere Merkmale, Vorteile und weitere Ausführungsformen der Erfindung sind im Folgenden beschrieben oder werden dadurch offenbar.

Gemäß der Erfindung wird die Beeinflussungsvorrichtung fest an einem unbeweglichen Teil des Fahrrads angeordnet. Vorteil hiervon ist eine besonders einfache Anordnung und Wartung der Beeinflussungsvorrichtung.

Gemäß der Erfindung wird die Felderzeugungseinrichtung an einem rotierenden Bauteil des Fahrrads angeordnet, wobei die Geschwindigkeit des Fahrrads durch die Rotation des Bauteils zumindest mittelbar repräsentiert wird. Vorteil hiervon ist eine zuverlässige Ermittlung einer Geschwindigkeit des Fahrrads.

Gemäß einer Weiterbildung der Erfindung stellt die Felderzeugungseinrichtung ein konstantes Magnetfeld durch ein Felderzeugungselement in Form eines Magneten, insbesondere eines Permanentmagneten, bereit. Vorteil hiervon ist eine einfache Bereitstellung und Detektion mittels eines entsprechenden Magnetfeldsensors.

Gemäß der Erfindung erfolgt das Beeinflussen des magnetischen Feldes der Felderzeugungseinrichtung durch Bereitstellen zumindest eines weiteren elektrischen und/oder magnetischen Feldes zum zumindest teilweisen Unterdrücken und/oder Verändern und/oder Ergänzen des magnetischen Feldes, welches von der Detektionseinrichtung detektiert wird. Vorteil hiervon ist, dass beispielsweise ein Ausgangsmagnetfeld durch ein Gegenmagnetfeld unterdrückt, abgeschwächt und/oder ergänzt werden kann. Beispielsweise kann das von einem Sensor detektierte resultierende Feld so verändert werden, dass ansteigende oder fallende Flanken des elektrischen und/oder magnetischen Ausgangsfeldes vom Sensor nicht mehr richtig erkannt werden, was beispielsweise zu einer Detektion nur jedes zweiten Peaks im elektrischen und/oder magnetischen Ausgangsfeld durch den Sensor führt und in der Folge die Abregelgeschwindigkeit des Pedelecs verdoppelt wird.

Gemäß einer weiteren Weiterbildung der Erfindung werden zwei weitere Felder bereitgestellt, wobei eines der zwei Felder als Gegenfeld zum Unterdrücken des elektrischen und/oder magnetischen Feldes der Felderzeugungseinrichtung bereitgestellt wird und eines der zwei Felder als Ersatzfeld zum Ersetzen des elektrischen und/oder magnetischen Feldes der Felderzeugungseinrichtung. Vorteil hiervon ist die erhöhte Flexibilität, da ein frei vorgebbares Ersatzfeld vom Sensor detektiert wird und so die Abregelgeschwindigkeit in flexibler Weise gesetzt werden kann.

Gemäß einer weiteren Weiterbildung der Erfindung wird das zumindest eine weitere Feld als Zusatzfeld bereitgestellt, zusätzlich zum magnetischen Feld der Felderzeugungseinrichtung. Vorteil hiervon ist eine einfache Bereitstellbarkeit.

Gemäß der Erfindung wird zum Beeinflussen des magnetischen Feldes, welches von einer Detektionseinrichtung detektiert wird, dieses zunächst mittels einer Feldmesseinheit der Beeinflussungsvorrichtung gemessen. Einer der damit erzielten Vorteile ist eine genaue Kompensation, Unterdrückung oder dergleichen des elektrischen und/oder magnetischen Ausgangsfeldes durch ein oder mehrere weitere Felder.

Weitere wichtige Merkmale und Vorteile der Erfindung ergeben sich aus den abhängigen Ansprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der durch die Ansprüche definiert wird.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt in schematischer Form
- Fig. 1: Schritte eines Verfahrens gemäß einer Ausführungsform der vorliegenden Erfindung;
- Fig. 2: ein System gemäß einer Ausführungsform der vorliegenden Erfindung;
- Fig. 3: eine Beeinflussungsvorrichtung gemäß einer Ausführungsform der vorliegenden Erfindung; und
- Fig. 4: ein Fahrrad gemäß einer Ausführungsform der vorliegenden Erfindung.

### Ausführungsformen der Erfindung

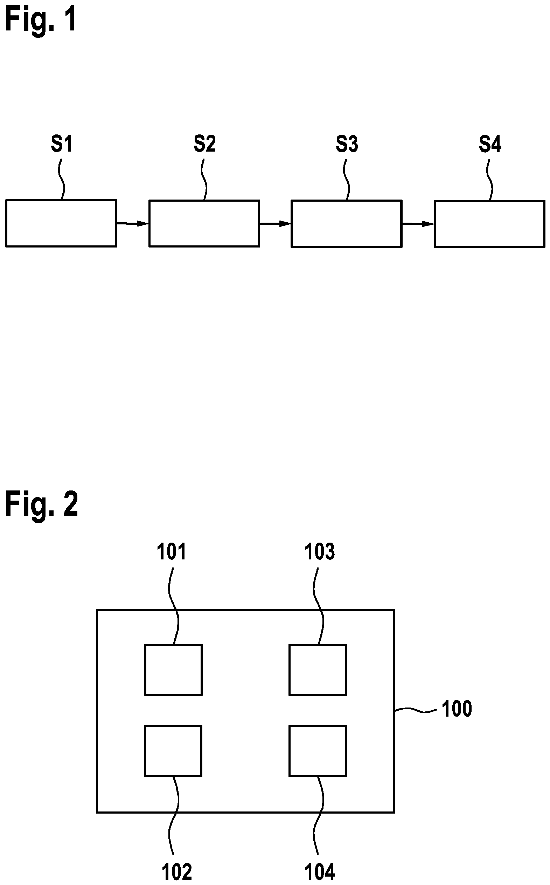

Figur 1 zeigt in schematischer Form Schritte eines Verfahrens gemäß einer Ausführungsform der vorliegenden Erfindung.

Im Detail zeigt Figur 1 Schritte eines Verfahrens zum Beeinflussen eines Ermittelns einer Geschwindigkeit eines Fahrrads mit zumindest zwei Rädern, insbesondere eines Pedelecs.

Das Verfahren umfasst dabei die folgenden Schritte:
- Bereitstellen S1 eines zeitlich und/oder räumlich variierenden magnetischen Feldes durch eine Felderzeugungseinrichtung an dem Fahrrad zur Ermittlung der tatsächlichen Geschwindigkeit des Fahrrads,
- Detektieren S2 des zumindest einer Raumrichtung kontinuierlich verändernden magnetischen Feldes an zumindest einer vorgegebenen Position mittels einer Detektionseinrichtung am Fahrrad,
- Ermitteln S3 der Geschwindigkeit des Fahrrads basierend zumindest auf dem detektierten Feld, und
- Beeinflussen S4 des magnetischen Feldes, welches von einer Detektionseinrichtung an zumindest einer festlegbaren Detektionsposition am Fahrrad detektiert wird, mittels einer Beeinflussungsvorrichtung derart, dass eine von der tatsächlichen Geschwindigkeit des Fahrrads abweichende Geschwindigkeit ermittelt wird.

Figur 2 zeigt in schematischer Form ein System gemäß einer Ausführungsform der vorliegenden Erfindung.

Im Detail zeigt Figur 2 in schematischer Form ein System 100 zum Beeinflussen eines Ermittelns einer Geschwindigkeit eines Fahrrads mit zumindest zwei Rädern, insbesondere eines Pedelecs.

Das System 100 umfasst
- eine Felderzeugungseinrichtung 101, die ausgebildet ist, ein zeitlich und/ oder räumlich variierendes magnetisches Feld an dem Fahrrad 1 zur Ermittlung einer Geschwindigkeit des Fahrrads 1 bereitzustellen, und
- eine Beeinflussungsvorrichtung 104, die zum Beeinflussen des magnetischen Feldes ausgebildet ist, welches von einer Detektionseinrichtung an zumindest einer festlegbaren Detektionsposition am Fahrrad 1 detektiert wird, derart, dass eine von der tatsächlichen Geschwindigkeit des Fahrrads 1 abweichende Geschwindigkeit ermittelt wird, und
- eine Detektionseinrichtung 102, die zum Detektieren eines variierenden, elektrischen und/oder magnetischen Feldes an der zumindest einen Detektionsposition am Fahrrad 1 ausgebildet ist, und
- eine Ermittlungseinrichtung 103, die zum Ermitteln der Geschwindigkeit des Fahrrads basierend zumindest auf dem detektierten Feld ausgebildet ist.

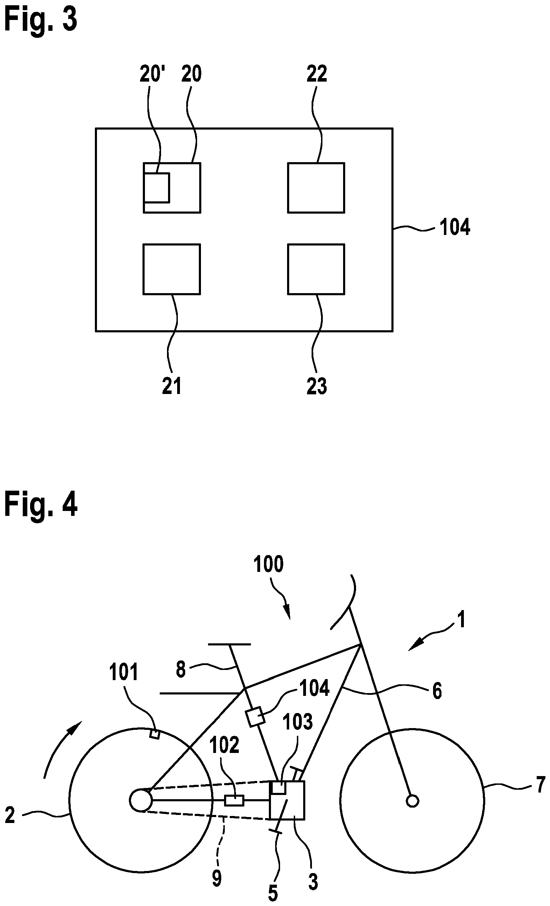

Figur 3 zeigt in schematischer Form eine Beeinflussungsvorrichtung 104 gemäß einer Ausführungsform der vorliegenden Erfindung.

Im Detail zeigt Figur 3 in schematischer Form eine Beeinflussungsvorrichtung zum Beeinflussen eines Ermittelns einer Geschwindigkeit eines Fahrrads mit zumindest zwei Rädern, insbesondere eines Pedelecs, insbesondere zur Festlegung an dem Fahrrad.

Die Beeinflussungsvorrichtung 104 umfasst dabei
- eine Felderzeugungseinheit 20, die ausgebildet ist, ein zeitlich und/oder räumlich variierendes elektrisches und/oder magnetisches Feld an zumindest einer Detektionsposition am Fahrrad 1 bereitzustellen, wobei dieses so ansteuerbar ist, dass eine von der tatsächlichen Geschwindigkeit des Fahrrads abweichende Geschwindigkeit ermittelt wird und
- eine Unterdrückungseinheit 21 zum zumindest teilweisen Unterdrücken und/oder Verändern und/oder Ergänzen eines von einer Detektionseinrichtung zu detektierenden elektrischen und/oder magnetischen Feldes einer Felderzeugungseinrichtung mittels der Felderzeugungseinheit, und optional
- eine Geschwindigkeitsermittlungseinrichtung 22, die zum Ermitteln der Geschwindigkeit des Fahrrads 1 basierend auf dem erzeugten Feld der Felderzeugungseinheit 20 und/oder einem elektrischen und/oder magnetischen Feld einer Felderzeugungseinrichtung ausgebildet ist, und
- eine Feldmesseinheit 23, die ausgebildet ist, ein zeitlich und/oder räumlich variierendes elektrisches und/oder magnetisches Feld bei abgeschalteter Felderzeugungseinheit zu detektieren.

Figur 4 zeigt in schematischer Form ein Fahrrad gemäß einer Ausführungsform der vorliegenden Erfindung.

Im Detail zeigt Figur 4 ein Fahrrad 1 mit einem Hinterrad 2 und einem Vorderrad 7. Mittels einer Antriebseinheit 3, die am Rahmen 6 des Fahrrads 1 angeordnet ist und sowohl eine Motorunterstützung bereitstellen kann als auch eine Pedaleinheit mit Pedalen 5 zum manuellen Antrieb beinhaltet, kann das Hinterrad 2 über eine Kette 9 angetrieben werden. In dem Hinterrad 2 ist eine Felderzeugungseinrichtung 101 in Form eines Permanentmagneten angeordnet. Weiterhin ist im Bereich zwischen Antriebseinheit 3 und Hinterrad 2 am Rahmen 6 eine Detektionseinrichtung 102 in Form zumindest eines Sensors angeordnet. Der Sensor kann dabei das durch die Drehung des Hinterrads 2 durch den Permanentmagneten sich am Ort des Sensors verändernde magnetische Feld zumindest eindimensional, vorzugsweise zwei- oder dreidimensional messen. Weiterhin umfasst das Fahrrad 1 eine Ermittlungseinrichtung 103, die zum Ermitteln der Geschwindigkeit des Fahrrads ausgebildet ist. Hierzu ist diese mit der Detektionseinrichtung 102 verbunden und ermittelt aus den von der Detektionseinrichtung 102 erhaltenen Signalen des detektierten Magnetfelds die entsprechende Geschwindigkeit des Fahrrads 1. Mittels einer Beeinflussungsvorrichtung 104, die zum Beeinflussen des von dem zumindest einen Sensor zu detektierenden elektrischen und/oder magnetischen Ausgangsfeldes ausgebildet ist und die beispielsweise oberhalb der Detektionseinrichtung 102 und unterhalb eines Sattels 8 des Fahrrads 1 angeordnet sein kann, kann nun das von der Detektionseinrichtung 102 zu detektierende magnetische Feld beeinflusst werden, was im Folgenden durch Erläuterung des Zusammenwirkens der verschiedenen Einheiten und Einrichtungen des Fahrrads 1 beschrieben wird.

Das System 100, welches insbesondere einen Geschwindigkeitsemulator für das Fahrrad 1 darstellt, kann hinsichtlich seiner Einzelkomponenten Felderzeugungseinrichtung 101, Detektionseinrichtung 102, Ermittlungseinrichtung 103 und Beeinflussungsvorrichtung 104, unterschiedliche Verbaupositionen aufweisen, beispielsweise am Fahrradrahmen 6, am Ausfallende, an der Antriebseinheit 3, insbesondere unter einer Abdeckung, sodass das System 100 zumindest teilweise nicht von außen sichtbar ist, zwischen Antriebseinheit 3 und Hinterrad 2 oder dergleichen.

Die unterschiedlichen Verbaupositionen resultieren insbesondere in einer angepassten vorgebbaren Ansteuerung zur Erzeugung einer oder mehrerer Magnetfelder in den magnetfeldgebenden Elementen, also einer Felderzeugungseinheit 20 der Beeinflussungsvorrichtung 104, beispielsweise hinsichtlich Amplitude und/oder Richtung. Das Prinzip beziehungsweise die Funktion ist jedoch für die unterschiedlichen Verbaupositionen im Wesentlichen gleich: Felderzeugungselemente, hier magnetfeldgebende Elemente, wie beispielsweise ein oder mehrere Spulen, ein oder mehrere stromdurchflossene Leiter, ein oder mehrere zweidimensional wirkende Spulen, ein oder mehrere dreidimensional wirkende Spulen, ein oder mehrere rotierende Magneten in der Beeinflussungsvorrichtung 104, ein Elektromotor, etc. emulieren und stellen Magnetfelder bereit, welche den durch einen im Reifen des Hinterrads 2 mitrotierenden ein oder mehreren Magneten - in Figur 4 Permanentmagnet der Felderzeugungseinrichtung 101 - ähneln. Folglich findet eine kontinuierliche Signalerzeugung im physikalischen Wirkpfad statt. Das so erzeugte Signal muss dem eines mitrotierenden Magneten auf mindestens einer Achse, beispielsweise einer eindimensionalen Spule, ähneln. Insbesondere ist hierbei auf die Flanken beim Anstieg und/oder Abfall der magnetischen Feldstärke beziehungsweise Flussdichte und/oder einen Peak-Wert, also der maximalen Amplitude der Feldstärke beim Sensor der Antriebseinheit 3 zu achten. In einer möglichen Ausführungsform der Erfindung weist die Beeinflussungsvorrichtung 104 vorzugsweise eine eigene Geschwindigkeitsmesseinrichtung auf, beispielsweise einen eigenen Reed-Sensor, ein eigenes GPS-Modul, einen eigenen Magnetfeldsensor, Inertialsensorik oder dergleichen, um eine Referenz für die selbst erzeugte Geschwindigkeitsvorgabe zur tatsächlichen Geschwindigkeit des Fahrrads zu berechnen.

Die emulierten beziehungsweise manipulierten Magnetfelder, bereitgestellt durch die Beeinflussungsvorrichtung 104 und die Felderzeugungseinrichtung 101, werden letztendlich durch den Sensor in der Detektionseinrichtung 102, die beispielsweise in der Antriebseinheit 3 angeordnet sein kann, detektiert und dort in eine emulierte Fahrgeschwindigkeit durch die Ermittlungseinrichtung 103 umgerechnet. Insbesondere kann so eine Geschwindigkeitsvorgabe unabhängig von der tatsächlichen Fahrgeschwindigkeit des Fahrrads 1 erfolgen. Dies kann im Rahmen von Tests von Pedelec-Funktionen oder dergleichen erforderlich sein.

Ausführungsformen der Erfindung nutzen hierbei unter anderem die folgenden Prinzipien:
a) Unterdrückendes Prinzip: Hier ist die Felderzeugungseinrichtung 101 an einem Rad des Fahrrads angeordnet. Es ist somit beispielsweise ein Magnet im Hinterrad angeordnet.
b) Gebendes Prinzip: Hier ist die Felderzeugungseinrichtung 101 am Fahrrad selbst angeordnet. Es ist somit beispielsweise kein Magnet im Hinter- oder Vorderrad angeordnet.

Es kann beispielsweise ein mitrotierender Magnet im Hinterrad 2, zum Beispiel an einer Speiche, auf oder in der Felge, vorzugsweise am Luftventil, an der magnetisierten Bremsscheibe oder dergleichen angeordnet sein. Das System 100 ist nun ausgebildet, beispielsweise durch geeignete Ansteuerung der eigenen magnetfeldgebenden Elemente, das Magnetfeld des Magneten am Rad temporär durch ein Gegenfeld zu unterdrücken, abzuschwächen oder zu verändern, so dass beispielsweise nur jeder zweite Magnetfeldpeak von der Ermittlungseinrichtung 103 erkannt wird beziehungsweise das Magnetfeld des Magneten so geglättet oder verrauscht wird, dass in der Ermittlungseinrichtung 103 der Peak beziehungsweise die ansteigenden/fallenden Flanken nicht mehr korrekt erkannt werden. Dies führt beispielsweise zu einer höheren Abregelgeschwindigkeit für die Motorunterstützung des Fahrrads.

In einer weiteren Ausführungsform kann das System 100, insbesondere die Beeinflussungsvorrichtung 104 auch ausgebildet sein, das Magnetfeld des Magneten durch weitere ergänzende Magnetfelder zu vervielfachen. Dies führt beispielsweise zu einer niedrigeren Abregelgeschwindigkeit für die Motorunterstützung des Fahrrads.

In einer weiteren Ausführungsform kann das System 100 auch ausgebildet sein, das Magnetfeld des Magneten durch ein Gegenfeld beziehungsweise Störfeld zu unterdrücken oder zu verrauschen und anschließend durch ein eigenes, komplett unabhängiges Feld zu ersetzen. Dies führt beispielsweise zu einer beliebig einstellbaren Abregelgeschwindigkeit für die Motorunterstützung des Fahrrads.

Umfasst die Beeinflussungsvorrichtung 104 - wie im vorliegenden Fall - eine Geschwindigkeitsermittlungseinrichtung 22 zum Ermitteln der Geschwindigkeit des Fahrrads 1 basierend auf dem erzeugten Feld der Felderzeugungseinheit 20 und/oder einem elektrischen und/oder magnetischen Feld einer Felderzeugungseinrichtung, ist eine Ausführungsform der Erfindung, die eine Feldmesseinheit 23 und damit ein Messen der im Laufrad mitrotierenden Magnetfelder umfasst, vorteilhaft, da insbesondere die tatsächlichen Magnetfelder leichter nachgeahmt beziehungsweise emuliert werden können und auch eine vorhandene Geschwindigkeitsermittlungseinrichtung nicht verändert werden muss, insbesondere kein Entfernen der Felderzeugungseinrichtung 101 im Rad erforderlich ist.

Im Detail kann so beispielsweise durch die Rotation eines Permanentmagneten im Laufrad des Fahrrads 1 ein dreidimensionales Magnetfeld erzeugt werden, welches von einem rahmenfesten 3D-Sensor gemessen wird und zu typischen Magnetfeldamplituden in seinen Messachsen führt. Um eine möglichst exakte Unterdrückung des vom rotierenden Magneten ausgehenden Magnetfelds zu erreichen, können mehrere Spulen miteinander kombiniert und diese entsprechend angesteuert werden, um ein 2D- oder 3D-Magnetfeld zu erzeugen.

Beim oben genannten gebenden Prinzip ist keine mitrotierende Felderzeugungseinrichtung 101 im Hinterrad angeordnet beziehungsweise diese muss vor Inbetriebnahme vom Hinterrad entfernt werden. Das System 100, insbesondere die Beeinflussungsvorrichtung 104 ist nun ausgebildet, beispielsweise durch geeignete Ansteuerung der eigenen magnetfeldgebenden Elemente, das Magnetfeld des Magneten am Rad durch ein eigenes, komplett unabhängiges Feld zu ersetzen. Dies führt beispielsweise zu einer beliebig einstellbaren Abregelgeschwindigkeit für die Motorunterstützung des Fahrrads. Hier kann es vorteilhaft sein, dass bei der Ansteuerung keine Abhängigkeiten, insbesondere keine zeitlichen oder hinsichtlich der Amplitude zu einer mitrotierenden Felderzeugungseinrichtung 101 im Rad auftreten. Umfasst das System 100 - wie im vorliegenden Fall - eine Geschwindigkeitsermittlungseinrichtung 22 zum Ermitteln der Geschwindigkeit des Fahrrads basierend auf einem alternativen Verfahren zur Ermittlung der Geschwindigkeit, benötigt eine derartige Ausführungsform der Erfindung keine Einrichtung zur Messung eines Magnetfelds. Eine solche Ausführungsform kann also beispielsweise eine Geschwindigkeitsermittlung mittels GPS, Reed-Sensor-Messprinzip und/oder Inertialsensorik bereitstellen.

Für beide oben genannten Prinzip-Varianten können geeignete steigende und fallende Flanken sowie Peakwerte des Magnetfeldes in mindestens einer Raumrichtung vorgegeben werden. Dies kann herstellerseitig oder durch Einlernen beim Händler oder Endkunden erfolgen. Ist Letzteres der Fall und ist beispielsweise ein Magnet dauerhaft im Reifen verbaut, kann dies insbesondere "on the Ride", zyklisch, auf Anforderung oder durch ein vorgebbares Ereignis getriggert werden oder auch einmalig zu Beginn oder immer wieder durch Nachkalibrierung erfolgen.

Bei einer Ausführungsform der Erfindung gemäß dem gebenden Prinzip b) ist später, also nach Auslieferung beziehungsweise beim erstmaligen Betrieb beim Endkunden, keine Felderzeugungseinrichtung 101 in einem Rad angeordnet. Daher muss das System 100 zunächst eingelernt werden. Wenn das System 100 dann beispielsweise die Flanken sowie Peakwerte nach einigen Radumdrehungen eingelernt hat, kann der Magnet entfernt werden.

Es ist allerdings auch ebenso möglich, dies durch manuelle Eingabe durch den Nutzer, zum Beispiel durch App per Bluetooth, vorzunehmen. Eine Kalibrierung des Systems 100 kann dann iterativ, zum Beispiel durch Try-and-Error durch den Nutzer erfolgen. Standardprofile für Standardverbaupositionen können dabei vorprogrammiert und angepasst werden.

Insgesamt können ein oder mehrere Einrichtungen und/oder Einheiten des Systems 100 eine eigene Stromversorgung aufweisen oder gemeinsam und/oder einzeln mit einer Stromversorgung des Fahrrads 1 verbunden sein.

Zusammenfassend kann zumindest eine Ausführungsform der vorliegenden Erfindung zumindest einen der folgenden Vorteile und/oder zumindest eines der folgenden Merkmale bereitstellen:
- Bereitstellung eines Geschwindigkeitsemulators, welcher fest am Rahmen, vorzugsweise zwischen einem Magnetfeldsensor in der Antriebseinheit sowie dem Hinterrad, verbaut ist.
- Temporär magnetfeldgebende Elemente, zum Beispiel Spulen.
- Eine eigene Spannungsversorgung der Einheiten und/oder Einrichtungen oder eine vom Fahrrad bereitgestellte Spannungsversorgung für die Einheiten und/oder Einrichtungen.
- Vorzugsweise eine eigene Geschwindigkeitsmesseinrichtung der Beeinflussungsvorrichtung.
- Geschwindigkeitsvorgabe für ein Fahrrad, welche von der tatsächlichen Fahrgeschwindigkeit losgelöst ist in Form von emulierten, kontinuierlichen und temporär emittierten Magnetfeldern.
- Hohe Flexibilität.
- Einfachere Überprüfung von Funktionen des Fahrrads.
- Anpassung des Signals auf dem physikalischen Wirkpfad hinsichtlich der Geschwindigkeitsvorgabe unabhängig von der tatsächlichen Fahrgeschwindigkeit des Fahrrads.
- Beeinflussung eines gemessenen Signals zur Ermittlung der Geschwindigkeit auch bei Messung von kontinuierlichen Werten von einem Sensor - im Gegensatz zu dem bisher bekannten Reed-Sensor mit Reed-Signal, welches nur die Werte 0 und 1 aufweist.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zum Beeinflussen eines Ermittelns einer Geschwindigkeit eines Fahrrads (1) mit zumindest zwei Rädern (2, 7), insbesondere eines Pedelecs, umfassend die Schritte:
- Bereitstellen (S1) eines zeitlich und/oder räumlich variierenden magnetischen Feldes durch eine Felderzeugungseinrichtung (101) an dem Fahrrad (1) zur Ermittlung einer Geschwindigkeit des Fahrrads (1), wobei die Felderzeugungseinrichtung (101) an einem rotierenden Bauteil des Fahrrads (1) angeordnet wird, wobei die tatsächliche Geschwindigkeit des Fahrrads (1) durch die Rotation des Bauteils zumindest mittelbar repräsentiert wird, wobei das magnetische Feld von einer Detektionseinrichtung (102) an zumindest einer Detektionsposition am Fahrrad detektiert wird, wobei eine Ermittlungseinrichtung (103) zur Ermittlung der Geschwindigkeit des Fahrrads basierend zumindest auf dem detektierten Feld ausgebildet ist, **dadurch gekennzeichnet, dass** das Verfahren die weiteren Schritte umfasst:
- Beeinflussen (S4) des magnetischen Feldes mittels einer Beeinflussungsvorrichtung (104) derart, dass eine von der tatsächlichen Geschwindigkeit des Fahrrads (1) abweichende Geschwindigkeit ermittelt wird, wobei die Beeinflussungsvorrichtung (104) fest an einem unbeweglichen Teil des Fahrrads (1) angeordnet wird, wobei das Beeinflussen des magnetischen Feldes der Felderzeugungseinrichtung (101) durch Bereitstellen zumindest eines weiteren elektrischen und/oder magnetischen Feldes zum zumindest teilweisen Unterdrücken und/oder Verändern und/oder Ergänzen oder Ersetzen des magnetischen Feldes, welches von der Detektionseinrichtung (102) detektiert wird, erfolgt, wobei zum Beeinflussen des magnetischen Feldes dieses zunächst mittels einer Feldmesseinheit (23) der Beeinflussungsvorrichtung (104) gemessen wird.

2. Verfahren gemäß Anspruch 1, wobei die Felderzeugungseinrichtung (101) ein konstantes Magnetfeld durch ein Felderzeugungselement in Form eines Magneten, insbesondere eines Permanentmagneten, bereitstellt.

3. Verfahren gemäß einem der vorhergehenden Ansprüche, wobei zwei weitere Felder bereitgestellt werden, wobei eines der zwei Felder als Gegenfeld zum Unterdrücken des magnetischen Feldes der Felderzeugungseinrichtung (101) bereitgestellt wird und eines der zwei Felder als Ersatzfeld zum Ersetzen des magnetischen Feldes der Felderzeugungseinrichtung (101) bereitgestellt wird.

4. Verfahren gemäß einem der vorhergehenden Ansprüche, wobei das zumindest eine weitere Feld als Zusatzfeld bereitgestellt wird, zusätzlich zum magnetischen Feld der Felderzeugungseinrichtung (101).

5. System (100) zum Beeinflussen eines Ermittelns einer Geschwindigkeit eines Fahrrads (1) mit zumindest zwei Rädern (2, 7), insbesondere eines Pedelecs, umfassend
eine Felderzeugungseinrichtung (101), die ausgebildet ist, ein zeitlich und/oder räumlich variierendes magnetisches Feld an dem Fahrrad (1) zur Ermittlung der tatsächlichen Geschwindigkeit des Fahrrads (1) bereitzustellen, und
- eine Detektionseinrichtung (102) zum Detektieren des magnetischen Feldes an einer zumindest einen Detektionsposition am Fahrrad (1), und
- eine Ermittlungseinrichtung (103) zum Ermitteln der Geschwindigkeit des Fahrrads (1) basierend zumindest auf dem detektierten magnetischen Feld,
**dadurch gekennzeichnet, dass** das System weiter eine Beeinflussungsvorrichtung (104) aufweist,
die zum Beeinflussen (S4) des magnetischen Feldes ausgebildet ist, welches von einer Detektionseinrichtung an zumindest einer Detektionsposition am Fahrrad (1) detektiert wird, derart, dass eine von der tatsächlichen Geschwindigkeit des Fahrrads abweichende Geschwindigkeit ermittelt wird, wobei die Beeinflussungsvorrichtung (104) zur Festlegung an einem unbeweglichen Teil des dem Fahrrads (1) ausgebildet ist, umfassend
eine Felderzeugungseinheit (20), die ausgebildet ist, ein zeitlich und/oder räumlich variierendes elektrisches und/oder magnetisches Feld an zumindest einer Detektionsposition am Fahrrad (1) bereitzustellen, wobei diese so ansteuerbar ist, dass eine von der tatsächlichen Geschwindigkeit des Fahrrads abweichende Geschwindigkeit ermittelt wird,
eine Unterdrückungseinheit (21), die zum zumindest teilweisen Unterdrücken und/oder Verändern und/oder Ergänzen oder Ersetzen eines von einer Detektionseinrichtung (102) zu detektierenden magnetischen Feldes einer Felderzeugungseinrichtung (101) mittels der Felderzeugungseinheit (20) ausgebildet ist, und
eine Feldmesseinheit (23), die ausgebildet ist, ein zeitlich und/oder räumlich variierendes magnetisches Feld bei abgeschalteter Felderzeugungseinheit (20) zu detektieren.

6. System (100) gemäß Anspruch 5, wobei die Beeinflussungsvorrichtung (104) eine Geschwindigkeitsermittlungseinrichtung (22) umfasst, die zum Ermitteln der Geschwindigkeit des Fahrrads (1) basierend auf dem erzeugten Feld der Felderzeugungseinheit (20) und/oder einem magnetischen Feld einer Felderzeugungseinrichtung (101) ausgebildet ist.

7. Fahrrad (1) mit einem System (100) gemäß einem der Ansprüche 5-6.

## Claims

1. Method for influencing a determination of a speed of a bicycle (1) having at least two wheels (2, 7), in particular a pedelec, comprising the steps of:
- providing (S1) a magnetic field that varies in time and/or space by way of a field generation device (101) on the bicycle (1) for the purpose of determining a speed of the bicycle (1), the field generation device (101) being arranged on a rotating component of the bicycle (1), the actual speed of the bicycle (1) being at least indirectly represented by the rotation of the component, wherein the magnetic field is detected by a detection device (102) at at least one detection position on the bicycle, a determination device (103) being designed to determine the speed of the bicycle based on at least the detected field, **characterized in that** the method comprises the further steps of:
- influencing (S4) the magnetic field by means of an influencing device (104) in such a way that a speed that differs from the actual speed of the bicycle (1) is determined, the influencing device (104) being arranged in a fixed manner on an immobile part of the bicycle (1), wherein the magnetic field of the field generation device (101) is influenced by providing at least one further electrical and/or magnetic field for at least partially suppressing and/or modifying and/or supplementing or replacing the magnetic field detected by the detection device (102), the magnetic field being influenced by first measuring it by means of a field measurement unit (23) of the influencing device (104).

2. Method according to Claim 1, wherein the field generation device (101) provides a constant magnetic field by way of a field generation element in the form of a magnet, in particular a permanent magnet.

3. Method according to either of the preceding claims, wherein two further fields are provided, one of the two fields being provided as an opposing field for suppressing the magnetic field of the field generation device (101) and one of the two fields being provided as a substitute field for replacing the magnetic field of the field generation device (101).

4. Method according to one of the preceding claims, wherein the at least one further field is provided as an additional field, in addition to the magnetic field of the field generation device (101).

5. System (100) for influencing a determination of a speed of a bicycle (1) having at least two wheels (2, 7), in particular a pedelec, comprising
a field generation device (101) designed to provide a magnetic field that varies in time and/or space on the bicycle (1) for the purpose of determining the actual speed of the bicycle (1), and
- a detection device (102) for detecting the magnetic field at at least one detection position on the bicycle (1), and
- a determination device (103) for determining the speed of the bicycle (1) based on at least the detected magnetic field,
**characterized in that** the system further comprises an influencing device (104) designed to influence (S4) the magnetic field detected by a detection device at at least one detection position on the bicycle (1) in such a way that a speed that differs from the actual speed of the bicycle is determined, the influencing device (104) being designed to be fixed on an immobile part of the bicycle (1), comprising
a field generation unit (20) designed to provide an electrical and/or magnetic field that varies in time and/or space at at least one detection position on the bicycle (1), said field generation unit being able to be controlled in such a way that a speed that differs from the actual speed of the bicycle is determined,
a suppression unit (21) designed to at least partially suppress and/or modify and/or supplement or replace a magnetic field of a field generation device (101) that can be detected by a detection device (102) by means of the field generation unit (20), and
a field measurement unit (23) designed to detect a magnetic field that varies in time and/or space when the field generation unit (20) is switched off.

6. System (100) according to Claim 5, wherein the influencing device (104) comprises a speed determination device (22) designed to determine the speed of the bicycle (1) based on the generated field of the field generation unit (20) and/or a magnetic field of a field generation device (101).

7. Bicycle (1) having a system (100) according to either of Claims 5-6.

## Revendications

1. Procédé pour influencer la détermination de la vitesse d'un vélo (1) comprenant au moins deux roues (2, 7), en particulier d'un vélo à assistance électrique, comprenant les étapes suivantes :
- fournir (S1) un champ magnétique variant dans le temps et/ou dans l'espace par un dispositif (101) de génération de champ sur le vélo (1) afin de déterminer une vitesse du vélo (1), le dispositif (101) de génération de champ étant agencé sur un composant rotatif du vélo (1), la vitesse réelle du vélo (1) étant représentée au moins indirectement par la rotation de l'élément, le champ magnétique étant détecté par un dispositif de détection (102) en au moins une position de détection sur le vélo, un dispositif de détermination (103) étant conçu pour déterminer la vitesse du vélo sur la base au moins du champ détecté, **caractérisé en ce que** le procédé comprend les étapes supplémentaires suivantes :
- influencer (S4) le champ magnétique au moyen d'un dispositif d'influence (104) de telle sorte qu'une vitesse s'écartant de la vitesse réelle du vélo (1) soit déterminée, le dispositif d'influence (104) étant agencé de manière fixe sur une partie immobile du vélo (1), l'influence du champ magnétique du dispositif (101) de génération de champ s'effectuant par la fourniture d'au moins un autre champ électrique et/ou magnétique pour au moins partiellement supprimer et/ou modifier et/ou compléter ou remplacer le champ magnétique qui est détecté par le dispositif de détection (102), le champ magnétique étant d'abord mesuré au moyen d'une unité (23) de mesure de champ du dispositif d'influence (104) afin d'influencer le champ magnétique.

2. Procédé selon la revendication 1, dans lequel le dispositif (101) de génération de champ fournit un champ magnétique constant au moyen d'un élément de génération de champ sous la forme d'un aimant, en particulier un aimant permanent.

3. Procédé selon l'une des revendications précédentes, dans lequel deux autres champs sont prévus, l'un des deux champs étant prévu en tant que champ antagoniste pour supprimer le champ magnétique du dispositif (101) de génération de champ et l'un des deux champs étant prévu en tant que champ de remplacement pour remplacer le champ magnétique du dispositif (101) de génération de champ.

4. Procédé selon l'une des revendications précédentes, dans lequel ledit au moins un autre champ est prévu en tant que champ supplémentaire, en plus du champ magnétique du dispositif (101) de génération de champ.

5. Système (100) pour influencer la détermination d'une vitesse d'un vélo (1) ayant au moins deux roues (2, 7), en particulier d'un vélo à assistance électrique, comprenant
un dispositif (101) de génération de champ, qui est conçu pour fournir un champ magnétique variant dans le temps et/ou dans l'espace au niveau du vélo (1) afin de déterminer la vitesse réelle du vélo (1), et
- un dispositif de détection (102), pour détecter le champ magnétique en au moins une position de détection sur le vélo (1), et
- un dispositif de détermination (103), pour déterminer la vitesse du vélo (1) sur la base au moins du champ magnétique détecté,
**caractérisé en ce que** le système comprend en outre un dispositif d'influence (104), qui est conçu pour influencer (S4) le champ magnétique qui est détecté par un dispositif de détection en au moins une position de détection sur le vélo (1), de telle sorte qu'une vitesse s'écartant de la vitesse réelle du vélo soit déterminée, le dispositif d'influence (104) étant conçu pour être fixé à une partie immobile du vélo (1), comprenant
une unité (20) de génération de champ, qui est conçue pour fournir un champ électrique et/ou magnétique variant dans le temps et/ou dans l'espace en au moins une position de détection sur le vélo (1), celle-ci étant apte à être commandée de telle sorte qu'une vitesse différente de la vitesse réelle du vélo soit déterminée,
une unité de suppression (21), qui est conçue pour supprimer et/ou modifier et/ou compléter ou remplacer au moins partiellement un champ magnétique d'un dispositif (101) de génération de champ à détecter par un dispositif de détection (102) au moyen de l'unité (20) de génération de champ, et
une unité (23) de mesure de champ, qui est conçue pour détecter un champ magnétique variant dans le temps et/ou dans l'espace lorsque l'unité (20) de génération de champ est désactivée.

6. Système (100) selon la revendication 5, dans lequel le dispositif d'influence (104) comprend un dispositif (22) de détermination de vitesse qui est conçu pour déterminer la vitesse du vélo (1) sur la base du champ généré par l'unité (20) de génération de champ et/ou d'un champ magnétique d'un dispositif (101) de génération de champ.

7. Vélo (1) comprenant un système (100) selon l'une des revendications 5 à 6.
